Europäisches Patentamt

European Patent Office

Office européen des brevets

(11) Publication number: **0 301 631**
**A2**

## EUROPEAN PATENT APPLICATION

(21) Application number: 88201472.3

(22) Date of filing: 12.07.88

(51) Int. Cl.4: **B32B 5/28 , B29C 67/14 , B29C 53/82**

(30) Priority: 20.07.87 GB 8717130

(43) Date of publication of application:
01.02.89 Bulletin 89/05

(84) Designated Contracting States:
**AT BE CH DE ES FR GR IT LI LU NL SE**

(71) Applicant: **BENTLEY-HARRIS MANUFACTURING CO.**
**241 Welsh Pool Road**
**Lionville Pennsylvania 19353(US)**

(72) Inventor: **Van Wassenhove, Denis**
**2 Placette des Myosotis**
**F-60800 Crepy-en-Valois(FR)**
Inventor: **Lemaire, Antoine**
**3 Rue Louis Couperin**
**F-60800 Crepy-en-Valois(FR)**
Inventor: **Ferrand, Jean**
**20 Rue des Capucines**
**F-60800 Crepy-en-Valois(FR)**
Inventor: **Heidelberger, Alain Rocquemont**
**F-60800 Crepy-en-Valois(FR)**

(74) Representative: **Newman, Dennis Daniel Ernest et al**
**Bowdon House Ashburton Road West**
**Trafford Park**
**Manchester M17 1RA(GB)**

(54) **Braided composite article.**

(57) A braided composite article comprises a matrix material reinforced by at least one layer of braided filaments for transmitting axial load, and defining an aperture in the article, the article including at least one layer of auxiliary filaments in the vicinity of the aperture which are braided with a larger braid angle than that of the load transmitting filaments and which inhibit elongation of the aperture when an axial load is applied thereto.

*Fig. 2.*

## Braided Composite Article

The present invention relates to braided composite articles and to methods of making braided composite articles.

Composite braided articles, comprising braided filaments impregnated with a matrix material such as a resin, find wide application as load bearing members, particularly because of their relatively high strength to weight ratio compared with similar articles of metallic or other material. Such articles are generally tubular, with circular or non-circular, for example oval, rectangular etc, cross-section.

A problem exists in attaching composite braided articles to other members of a structure. Attachment by means of adhesive has the advange that the load carrying structure of the article is not broken, and this technique may be used for example to attach a coupling piece to the braided article. However, the use of adhesive suffers from the disadvantage of providing a connection which in most cases is less strong than the braided article. Furthermore, the use of a separate coupling, for example to allow for rotation of the braided article, or to enable the article to be connected to a similar article, increases the overall weight, or size or both of the assembled structure.

Direct attachment to a braided composite article usually requires the provision of apertures in its walls. The disadvantage of forming such apertures by machining, for example by drilling, has the significant disadvantage that the braided filaments of the article must be broken. This reduces significantly the load carrying properties of the article.

It has been proposed to form apertures in braided composite articles by braiding filaments over a mandrel which has at least one pin extending through it. The braided filaments are thus constrained to pass around the pin. After impregnation of the braided filaments with resin, the mandrel and pin are removed to produce an article with an aperture which is defined by the braided filaments. In use a connection may be made to the article via the aperture and the braided filaments can transmit axial loads placed on the article at the aperture.

A problem with the known apertured composite article arises from the fact that it is preferable for optimum tensile strength to braid the filaments with a small braid angle (being the angle between the braided filaments and the braid axis), for example of from 15 to 20$^\circ$. However when an axial load is placed on an aperture in a braided composite article with a small braid angle, there can be a tendency for the aperture to elongate due to shear slippage of the braided filaments.

In a first aspect, the present invention provides a composite braided article which comprises a matrix material reinforced by at least one layer of braided filaments for transmitting axial load, and defining an aperture in the article, the article including at least one layer of auxiliary filaments in the vicinity of the aperture which are braided with a larger braid angle than that of the load transmitting filaments and which inhibit elongation of the aperture when an axial load is applied thereto.

The article of the first aspect of the invention has the advantage that elongation of the aperture is prevented on application thereto of an axial load, by means of the layer of auxiliary filaments. Moreover the auxiliary and load transmitting filaments can be applied in a convenient and continuous process by variation of the braid angle in successive layers of braided filaments. The braid angle of the load carrying filaments is preferably relatively small, for example less than about 30$^\circ$, more preferably from about 10$^\circ$ to about 20$^\circ$, especially about 15$^\circ$. The braid angle of the auxiliary filaments is preferably at least about 60$^\circ$, more preferably 70$^\circ$ to 80$^\circ$, especially about 75$^\circ$.

The location of the layer of auxiliary filaments is dependent on the application to which the braided article is to be put. Generally it will be desirable to provide the auxiliary filaments on the side or sides of the aperture from which axial force will be applied when the article is in use. It the article will encounter an axial force in only one direction, it will be necessary to provide the layer of auxiliary filaments on one side only of the aperture. On the other hand, if the article will encounter axial force in both axial directions, it will be desirable to provide auxiliary filaments on each side of the aperture. Preferably, this is achieved by providing a layer of auxiliary filaments which extends axially from one side of the aperture to the opposite side, with the auxiliary filaments defining the aperture in conjunction with the load transmitting filaments.

In a second aspect, the present invention provides a method of making a braided composite article, which comprises:

(a) providing a mandrel with at least one pin extending therethrough;

(b) applying over the mandrel at least one axially extending layer of braided filaments for transmitting axial load in the article, in such a way that the pin protrudes between the filaments and forms an aperture in the layer thereof;

(c) applying over the layer of load transmitting filaments in the vicinity of the aperture at least one layer of auxiliary filaments which are braided with a larger braid angle than that of the load transmitting filaments and which inhibit elongation of the aperture when an axial load is applied thereto; and

(d) impregnating the braided filaments with a matrix material.

The method of the invention has the advantages of being continuous to operate, and also extremely versatile. Simply by changing the configuration of the layer of auxiliary filaments it is possible to adapt the article for transmitting axial load in one or both axial directions. Furthermore, the overall strength of the article can be adapted to suit a particular application by provision of an appropriate number of layers of load transmitting filaments and of auxiliary filaments. In a preferred embodiment, the article of the invention comprises a plurality of layers of both. It is particularly preferred that the layers be braided in groups of layers of load transmitting filaments and of auxiliary filaments. It is especially preferred to employ alternating groups of layers, the outermost group of layers being of auxiliary filaments.

In a third aspect, the invention provides a braided composite article which comprises a matrix material reinforced by first and second layers of braided filaments for transmitting axial load and defining an aperture in the article, the first layer extending axially of the article up to one side of the aperture, the filaments of the layer then passing around the aperture and being braided to form the said second layer, extending axially from the aperture on top of the first layer.

The article of the third aspect of the invention has the advantages that a tensile axial load can be applied to the article via the aperture with no risk of elongation of the aperture due to shear slip of the filaments. Shear slip is avoided by having the load transmitting filaments pass around the aperture. Thus there is no necessity for the filaments to be braided beyond the aperture; this enables an apertured article to be made which can withstand tensile load, which has a low profile and whose weight is not undesirably increased by braided filaments beyond the aperture.

If the article of the third aspect of the invention is required to withstand compression loads in addition to tensile load it is preferred to include at least one layer of auxiliary filaments extending axially of the article upto the aperture on top of the first and second layers of load transmitting filaments, the auxiliary filaments being braided with a larger braid angle than that of the load transmitting filaments and inhibiting elongation of the aperture when an axial load is applied thereto.

In a fourth aspect, the present invention provides a method of making a braided composite article which comprises:

(a) providing a mandrel with a pin extending therethrough;

(b) braiding over the mandrel a first layer of filaments for transmitting load axially of the article, the layer extending axially of the mandrel upto the pin;

(c) passing the filaments around the pin, and

(d) braiding a second layer of load transmitting filaments over the said first layer, the second layer extending axially of the mandrel away from the pin; and

(e) impregnating the braided filaments with a matrix material.

The use of braiding techniques to arrange load transmitting filaments:

(i) to transmit loads axially along an article, and

(ii) around an aperture,

has been found to be more convenient in use than techniques in whch apertures are defined by unidirectional filaments. In particular, braiding is an efficient automatic process which is less craft sensitive than techniques which involve the laying of unidirectional filaments. Furthermore, braiding lends itself to the manufacture of hollow articles, with their attendant advantages in their high strength to weight ratio. Moreover, braiding is a highly versatile technique and can easily be adapted for the manufacture of articles with a range of configurations. In particular, it is easily possible to adapt an article to withstand compressive loads by providing a layer of braided auxiliary filaments, in the manner discussed above.

It will generally be advantageous to remove the mandrel and pin or pins after the impregnation of the filaments with resin. In particular, this enables the weight of the article to be kept small, and allows the mandrel to be reused. For many applications, a retractable metal rod of appropriate cross-section will serve as a suitable mandrel. However for articles with a complicated configuration, it may be preferable to employ a mandrel which is collapsable or which can be destroyed for example by heating to cause it to melt.

For articles which are tapered or have another complicated configuration, it is preferred to use a composite mandrel which comprises a removable metal rod and a profiled piece of material which remains within the braided article. A closed cell foam is preferred for the profiled material, in particular for its light weight.

The pin or pins, around which the apertures are formed, should be detachable from the mandrel to allow the mandrel to be removed from the article when this is desired. It is preferred that the pins have conical heads to aid the filaments in braiding around them.

The load transmitting filaments and the auxiliary filaments will generally be of the same material for convenience. Indeed, to allow full advantage to be taken of the convenience and versatility of the braiding technique, the load transmitting and auxiliary filaments will preferably be continous.

Preferred materials for the load transmitting filaments or the auxiliary filaments or both are glass fibres, carbon fibres, polyaramid fibres (such as those sold under the Trade Mark Kevlar) and fibres of aromatic polymers based on polyetherketones (such as those sold under the Trade Marks PEEK and Stilan).

The impregnating matrix material, for example resin, may be provided associated with the filaments as a prepreg, or it may be provided separately. The choice as to whether a thermoset or a thermoplastic material is used will depend to some extent on the application to which the article is to be put. Thermoplastic materials have the advantage of allowing a composite article to be post-formed.

Copending UK Patent Application No 8711644 discloses a composite article, and a coated fibre and a method of forming a composite article, which is adapted to be post-formed without kinking of the reinforcing fibres. The teaching of the patent application referred to above is applicable to the present invention, and is incorporated herein by this reference.

The filaments may be braided singly, but it is preferred to braid the filaments in tows to enable large diameter articles to be made and to reduce the complexity of the braiding operation.

As indicated above, by appropriate design, the article of this invention may be used in applications where they are subjected to tension or compression loads or both. The load may be static or dynamic. For example, the article of the invention may be used as a load bearing strut, for example in a structure such as a building or a bridge. When the article of the invention has more than one aperture, it may be used as the uprights of a ladder, and the apertures may receive rods which serve as rungs when the ladder is in use. If it can be ensured that the ladder is used only in one orientation, then it will not be necessary to provide layers of auxiliary filaments on both sides of each aperture. It will however be desirable to provide a layer of auxiliary filaments on at least one side of each aperture. The present invention thus allows a strong light ladder to be made of an insulating material which may be used for example in applications where it is exposed to high voltage power.

Alternatively, the article may be designed to rotate about an axle positioned in the aperture or to support a rotatable member positioned in the axle.

By having an aperture which is capable of accepting an axial load, the article of the invention can conveniently be joined to a similar article, particularly if one of the articles has a male end and the other has a female end.

Thus in another aspect, the invention provides a pair of composite braided articles connected together, each of which comprises at least one layer of braided filaments for transmitting axial load, the first article having a female end and the second article having a male end positioned within the female end of the first article, the braided filaments defining an aperture in each article towards the male or female end respectively which co-operate to receive a connecting piece. The connecting piece may be for example a bolt or a clevis pin.

The article of the invention may be provided with an insert positioned in the aperture. The insert will generally serve to reinforce the aperture. It may have additional functions, particularly when there will be relative rotation between the article and a member positioned in the aperture; the insert may serve to reduce friction between the article and the member, for example by being made of a low friction material or by incorporating an appropriate bearing.

The invention includes an article as specified above with a member positioned in the aperture. The member may be for example a connecting piece such as a bolt or clevis pin through which a connection is made to another article, which may be an article according to this invention. The member may be an elongate rod or an axle of composite or other material.

Articles and methods in accordance with the present invention will now be described by way of example with reference to the accompanying drawings, in which:

Figure 1 shows a mandrel with pins for forming a profiled composite braided article according to the invention;

Figure 2 shows schematically through the end of the com-posite braided article made using the mandrel shown in Figure 1; and

Figure 3 shows how articles in accordance with the invention may be connected together in series.

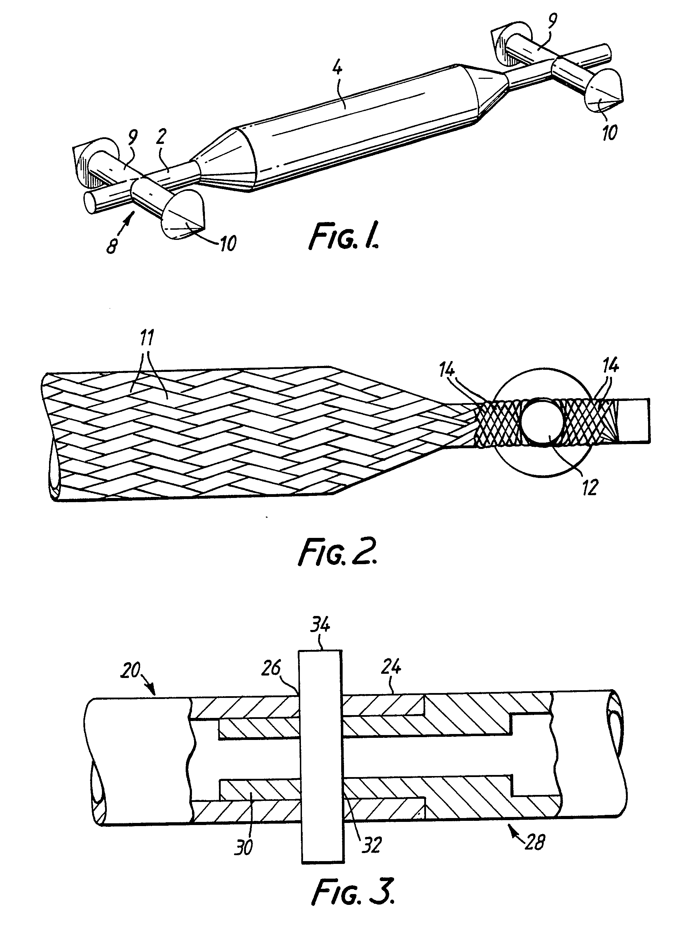

Referring to the drawings, Figure 1 shows a mandrel which comprises a steel rod 2 whose central portion is encased in a profiled piece of foam 4. The rod 2 is free to slide axially within the piece of foam 4. The rod 2 has a hole in each end, in which pins 8 are positioned. Each pin 8 has a wide body portion 9, and a conical head 10 which helps the filaments during braiding to fall onto one or other side of the pin, and thereby helps to form the aperture in the article.

In forming a composite braided article using the mandrel shown in Figure 1, one or more layers of load transmitting filaments are braided over the mandrel working axially back and forth along the mandrel. On encountering one of the pins 8 (that is to say when the braided filaments are tangential to the pin), the braider is stopped while the mandrel is traversed relative to the braider by a distance approximately equal to the diameter of the pin. The braider is then restarted and braiding is continued until the second pin is reached when the procedure is repeated.

Layers of auxiliary filaments are braided over the mandrel at each end in the vicinity of the pins 8. These layers are . braided with a braid angle that is larger than that of the load transmitting filaments; for example the braid angles may be 60° and 15° respectively. One or more layers of auxiliary filaments are preferably provided extending axially from one side of each pin to the other side.

After the desired number of layers of filaments has been braided over the mandrel, the filaments are impregnated with resin. After the resin has hardened, the pins 8 and the rod 2 are removed.

Referring to Figure 2, the braided composite comprises the profiled piece of foam 4. The load transmitting filaments 11, with a relatively small braid angle, are braided over the piece of foam 4, extend around the aperture 12 and are braided further on the side of the aperture 12 remote from the profiled piece of foam 4. Layers of braided auxiliary filaments 14, with a relatively large braid angle, extend axially from one side of the aperture 12 to the other.

Figure 3 shows how two composite braided articles can be connected together. The first member 20 has a female end 24. The load transmitting filaments of the first member 20 define an aperture 26 towards the female end 24. The second member 28 has a male end 30 in which the load transmitting filaments define an aperture 32. The male end 30 of the second member 28 is positioned within the female end 24 of the first member 20, and a connecting piece 34, which may be a bolt, is positioned in the apertures 26, 32.

Example

A composite braided strut was made using a mandrel having a configuration as shown in Figure 1. The components of the mandrel had the following dimensions:
- rod diameter 10 mm
- pins - wide body portion diameter 24 mm
- foam diameter 32 mm
- hole to hole spacing on rod 750 mm
10 layers of load transmitting filaments comprising 6k graphite were braided over the entire length of the rod on a 48 carrier braider with a braid angle of 15°. 4 layers of auxiliary filaments , each 60 mm long , were applied over the mandrel, in the vicinity of each pin, the layers being located symmetrically with respect to the respective pins.

After braiding, the filaments were impregnated with epoxy resin (CIBA) by injection and the epoxy resin was cured in an autoclave.

After removal of the mandrel rod and pins, the strut was tested under tension and compression. Failure under tension occurred at 9000 daN load and was due to elongation of the strut. Failure under compression occurred at 7000 daN and was due to buckling of the strut. In both the tension and compression tests, the apertures in the strut remained undeformed.

## Claims

1. A braided composite article which comprises a matrix material reinforced by at least one layer of braided filaments for transmitting axial load, and defining an aperture in the article, the article including at least one layer of auxiliary filaments in the vicinity of the aperture which are braided with a larger braid angle than that of the load transmitting filaments and which inhibit elongation of the aperture when an axial load is applied thereto.

2. An article as claimed in claim 1, in which the layer of auxiliary filaments extends in the axial direction from one side of the aperture to the opposite side, with the auxiliary filaments defining the aperture, in conjunction with the load transmitting filaments.

3. An article as claimed in claim 1 or claim 2, which comprises a plurality of layers of load transmitting filaments and plurality of layers of auxiliary filaments.

4. An article as claimed in claim 3, in which the outermost layer comprises auxiliary filaments.

5. An article as claimed in any one of the preceding claims, in which the load transmitting filaments define a plurality of apertures, each aperture having an associated layer of braided auxiliary filaments.

6. A braided composite article which comprises a matrix material reinforced by first and second layers of braided filaments for transmitting axial load and defining an aperture in the article, the first layer extending axially of the article upto one side of the aperture, the filaments of the layer then passing around the aperture and being braided to form the said second layer, extending axially from the aperture on top of the first layer.

7 . An article as claimed in claim 6, which includes at least one layer of auxiliary filaments which extends axially of the article upto the aperture on top of the first and second layers of load transmitting filaments, the auxiliary filaments being braided with a larger braid angle than that of the load transmitting filaments and inhibiting elongation of the aperture when a compression axial load is applied thereto.

8. An article as claimed in claim 6 or claim 7, in which the load transmitting filaments define at least one further aperture in the article, the or each further aperture having an associated layer of braided auxiliary filaments.

9. An article as claimed in any one of the preceding claims which includes a member positioned in the aperture, or in at least one of the apertures, through which an axial load can be applied to the aperture.

10. An article as claimed in any one of the preceding claims, which inculdes an insert within the aperture or within at least one of the apertures.

11. A method of making a braided composite article, which comprises:

(a) providing a mandrel with at least one pin extending therethrough;

(b) applying over the mandrel at least one axially extending layer of braided filaments for transmitting axial load in the article, in such a way that the pin protrudes between the filaments and forms an aperture in the layer thereof;

(c) applying over the layer of load transmitting filaments in the vicinity of the aperture at least one layer of auxiliary filaments vhich are braided with a larger braid angle than that of the load transmitting filaments and which inhibit elongation of the aperture when an axial load is applied thereto: and

(d) impregnating the braided filaments with a matrix material.

12. A method as claimed in claim 11, in which the layer of auxiliary filaments extends axially from one side of the aperture to the opposite side.

13. A method as claimed in claim 11 or claim 12, in which the braiding operation comprises:

(a) braiding the filaments over the mandrel until they are tangential to the pin;

(b) stopping the braider but continuing movement of the mandrel through the braider by a distance aproximately equal to the diameter of the pin; and

(c) restarting the braider.

14. A method of making a braided composite article which comprises:

(a) providing a mandrel with a pin extending therethrough;

(b) braiding over the mandrel a first layer of filaments for transmitting load axially of the article, the layer extending axially of the mandrel upto the pin;

(c) passing the filaments around the pin, and

(d) braiding a second layer of load transmitting filaments over the said first layer, the second layer extending axially of the mandrel away from the pin; and

(e) impregnating the braided filaments with a matrix material.

15. A method as claimed in claim 14, which includes the step of braiding at least one layer of auxiliary filaments on top of the first and second layers of load transmitting filaments, extending axially of the article upto the aperture, the auxiliary filaments being braided with a larger braid angle than that of the load transmitting filaments.

16. A pair of composite braided articles connected together, each of which comprises at least one layer of braided filaments for transmitting axial load, the first article having a female end and the second article having a male end positioned within the female end of the first article, the braided filaments defining an aperture in each article towards the male or female end respectively which co-operate to receive a connecting piece.

Fig. 1.

Fig. 2.

Fig. 3.